# EUROPEAN PATENT APPLICATION

(11) **EP 1 223 633 A1**
(43) Date of publication of application: **17.07.2002**
(21) Application number: 02000256.4
(22) Date of filing: 15.01.2002
(51) Int. Cl.: H01M 10/48, H01M 10/42

(54) **Electrolyte solution level gauge for electrolytic cells and/or batteries**

(30) Priority: 16.01.2001 IT VI010018
(71) Applicant: Stocchiero, Franco, 36050 Montorso Vicentino (IT)
(72) Inventor: Stocchiero, Franco, 36050 Montorso Vicentino (IT)
(74) Representative: Bonini, Ercole

(57) **Abstract**

A level gauge (1, 20) of the electrolyte solution (L) present inside electrolytic cells (C) and/or batteries is disclosed, comprising a support element (4) provided with two or more conductive members (2, 3; 12, 13, 14) separate from each other and adapted to be inserted inside said electrolytic cells (C) and/or battery. The conductive members (2, 3; 12, 13, 14) are electrically cooperating with a signalling device (6) adapted to issue a perceptible signal when the electrolyte solution (L) is wetting at least two of said conductive members (2, 3; 12, 13, 14).

## Description

The present invention relates to an electrolyte solution level gauge inside electrolytic cells and/or batteries particularly adapted to be used to check the battery charge.

It is well known that in the applications where a stationary current is required, batteries are widely used more particularly for starting engines of motor vehicles, driving transportation or handling vehicles such as fork trucks or operating no-break units and commercial and industrial equipment.

Batteries generally comprise a case in which several electrolytic cells are arranged, containing an electrolyte solution normally consisting of sulphuric acid and distilled water, conductive plates being immersed in said solution.

The electrolysis process occurring inside the electrolyte solution allows to obtain the desired voltage at the conductive plates, drawn outside at the battery terminals.

When the terminals are connected to a load, there is circulation of an electric current consisting of a flow of ions in the electrolyte.

In use the electrolyte level tends to decrease by evaporation and electrolytic resolution of the electrolyte and can go below the minimum useful level for a correct operation of the battery.

To this purpose when the solution level goes below said minimum level, the battery must be filled up with distilled water.

Therefore, it is clear that check of the level of electrolytic solution must be effected periodically to keep a good battery operation.

According to the state of the art, check of the level of electrolytic solution may be carried out directly with a visual inspection inside the battery cells after removal of the filling caps, or checking a level mark if the case is transparent.

Such a check can hardly be carried out when the battery is arranged in hardly accessible or poorly lit places.

Another known system is to insert into the battery a probe with an optical element, provided with coloured elements varying their position as a function of the level of liquid which they are contacted with, so as to show the observer different colours according to the level of said liquid.

Such a solution has however the same drawback that the inspection of the optical element may be difficult when the battery is installed in hardly accessible, dark or insufficiently lit places.

The present invention aims at overcoming said drawbacks.

A first object of the invention is to provide an electrolyte solution level gauge for electrolytic cells and/or batteries allowing an easier recognition of the level of liquid inside the cell in comparison with the known detectors, even when the cell is arranged in hardly accessible or poorly lit places.

Another object of the invention is to provide a gauge easy to be installed.

A further object of the invention is to provide a gauge allowing to detect more levels of the electrolytic solution.

The foregoing objects are attained by an electrolytic solution level gauge inside electrolytic cells and/or batteries that according to the main claim is characterised by comprising a support element provided with two or more conductive members separate from each other and adapted to be inserted inside said electrolytic cell and/or battery, said conductive members electrically co-operating with at least a signalling device adapted to issue a perceptible signal when said electrolyte solution is wetting at least two of said conductive members.

According to a preferred embodiment, the conductive members are two and consist of blades made of conductive metal with generally longitudinal development.

The conductive members are connected to the support element which is associated to a plug inserted in a hole made in the battery cover.

In this way the conductive members introduced into the battery are in contact with the electrolyte solution present in the battery.

The conductive members are series connected with a feeding cell belonging to said support, said cell being in turn series connected with a signalling light device consisting of a light emitting diode (LED). Inside such a circuit a press switch also being part of the support element is connected.

Advantageously the signalling light device allows inspection of the electrolyte level even in case of poor lighting.

Still advantageously, the press switch allows to carry out the inspection of the level of electrolyte liquid quickly and only when it is required, so as to keep low the feeding power consumption.

Said objects and advantages will be better understood by reading the following description of preferred embodiments with reference to the accompanying sheets of drawings in which:
- Fig. 1 is an isometric view of the signalling device of the invention;
- Fig. 2 shows the device of Fig. 1 applied to a plug;
- Fig. 3 shows the device of Fig. 2 applied to a battery;
- Fig. 4 shows the diagram of the electric circuit defined by the device of Fig. 1; and
- Fig. 5 shows a constructional modification of the device of Fig. 1.

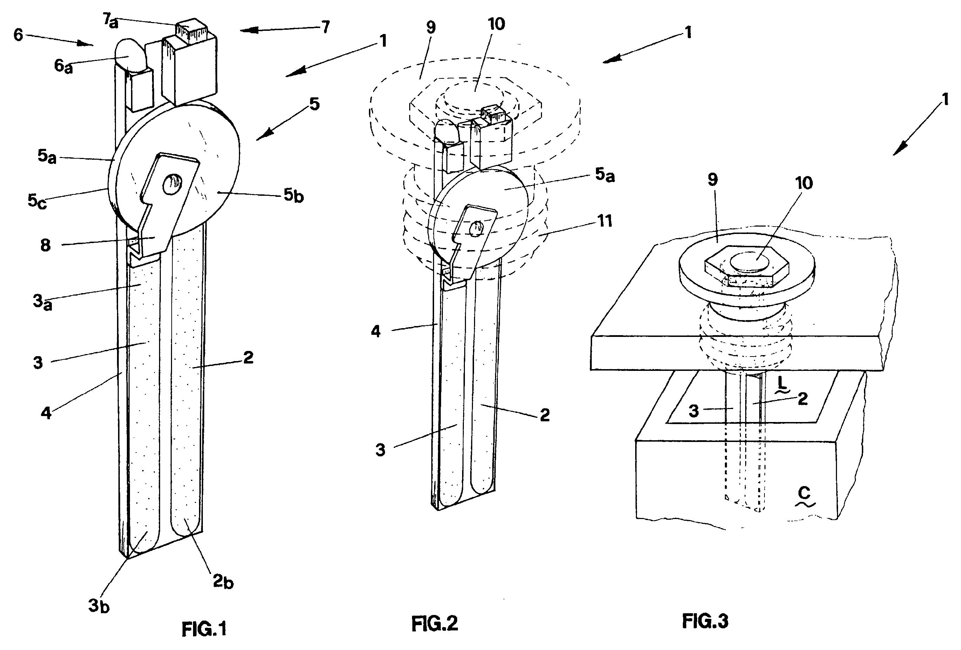

The detector of the invention is shown in Figs. 1 to 3 where it is generally indicated with reference numeral 1.

As shown more particularly in Fig. 1 the device comprises a first conductive member 2 and a second conductive member 3 both fixed to an insulating support element 4.

To the support element 4 an electric power source 5 consisting of a cell 5a, a light device 6 consisting of a light emitting diode (LED) 6a and breaking means 7 consisting of a press switch 7a are also applied.

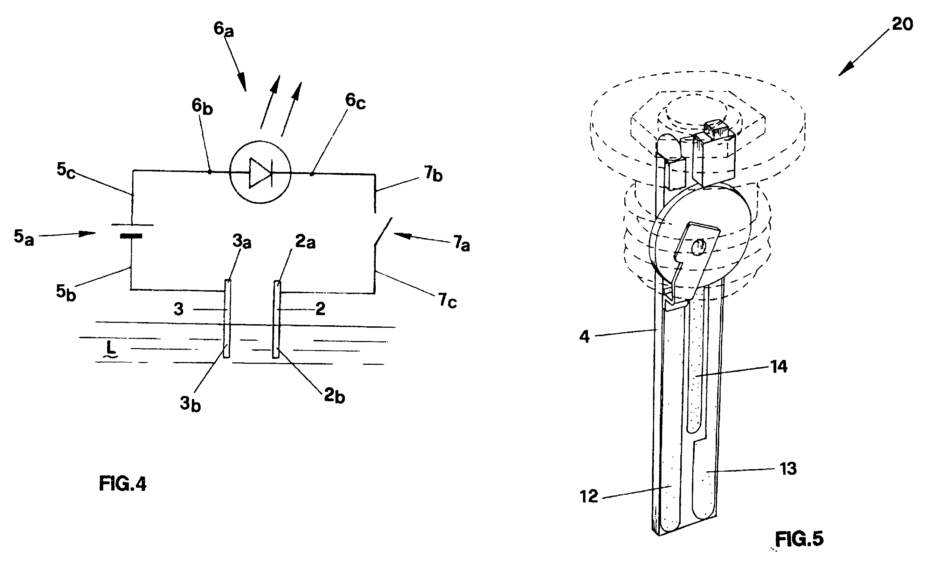

These elements are connected to each other so as to define the electric circuit shown in Fig. 4.

More particularly one can see in Fig. 1 that the support element 4 has a generally flat and elongated shape and the conductive members 2, 3 are applied on said element.

In a different embodiment not shown in the drawings, the conductive members 2, 3 may consist of a couple of conductive bars connected to the support element 4 only at one end.

The upper end 3a of the second conductive member 3 is connected to one of the poles 5b of the cell 5a through a conductive piece 8 while the other pole 5c of the cell 5a is electrically connected to the anode 6b of the signalling device LED 6a whose cathode 6c is connected to a terminal 7b of the press switch 7a. The other terminal 7c of the press switch 7a is finally connected to the upper end 2a of the first conductive member 2.

In this way the electric circuit diagrammatically shown in Fig. 4 is completed, where the free ends 2b, 3b of the conductive members 2, 3 are shown immersed in the electrolyte liquid L.

When the electrolyte L is above the minimum level, the conductive members 2, 3 are wetted by electrolyte L and if the press switch 7a is closed, electric current is circulating inside the circuit causing actuation of the signalling device 6a.

When said signalling device is a LED, this is lit and shows the correct operation of the battery.

In a different embodiment which is not shown in the drawings, the LED may be replaced by a filament lamp or an audible alarm.

Each of these embodiments may also be carried out without a switch, and in such a case the contact of both ends of the conductive members with the electrolytic liquid will be sufficient to actuate the signalling device.

Fig. 2 shows the detector of the invention applied to a support plug 9 adapted to carry out a single removable element.

The plug 9 has a central movable zone 10 in contact with the press switch 7a, while the outer surface 11 of the plug 9 is threaded.

In this way the detector may be inserted in the electrolytic cell C of the battery, as shown in Fig. 3, through anyone of the filling holes after removal of the corresponding cap. In a constructional version not shown in the drawings the plug may be provided with engagement means suitable for a press insertion in a corresponding hole made in the battery.

Another constructional version of the device of the invention indicated with numeral 20 is shown in Fig. 5 where one can see that the device has three conductive members 12, 13, 14 which are electrically insulated and of different lengths.

Said members define two couples 12, 13 and 12, 14 of conductive members thus making two different electrically equivalent circuits adapted to detect different liquid levels.

A proper signalling system not shown in the drawing, will allow to differentiate signals corresponding to the two different levels.

Such a version may be useful, for instance, when indication of both the minimum level and the maximum level of the electrolyte solution is desired.

In any mentioned embodiment the length of the conductive members should be such as to allow contact with the electrolyte liquid of the battery.

Therefore, it is to be understood that the device of the invention fully attains the intended objects in all the described embodiments.

Indeed, the object is attained to provide a detector allowing to signal the electrolyte level in a cell in a simple way even in case of insufficient lighting or difficult accessibility of the cell.

The object is also attained that the detector of the invention can be easily applied to the batteries by its insertion on the cover.

When the device is not being used, it can be removed from the battery cover and kept as a conventional closure plug.

In the constructional stage several modifications may be made to the detector of the invention.

For instance, as already mentioned, the light signalling device LED may be replaced by a filament lamp or an audible alarm such as a buzzer.

Another modification provides that the press switch is replaced by an ON/OFF switch allowing continuous detection of the electrolyte level.

A further modification provides that the feeding cell to be used is of different kind according to the constructional requirements of the device.

Another modification provides that the device is being fed by a direct connection with the terminals of the electrolytic cell.

A further modification provides that the plug lodging the device of the invention is of a different kind, for instance, a press plug matching the shape of the holes made on the battery cover.

Said different constructional embodiments are to be considered protected by the present patent when falling within the scope of the appended claims.

## Claims

1. A level gauge (1, 20) of the electrolyte solution (L) present inside electrolytic cells (C) and/or batteries **characterised by** comprising a support element (4) provided with two or more conductive members (2, 3; 2, 13, 14) separate from each other and adapted to be inserted inside said electrolytic cells (C) and/or battery, said conductive members (2, 3; 12, 13, 14) electrically co-operating with at least a signalling device (6) adapted to issue a perceptible signal when said electrolyte solution (L) is wetting at least two of said conductive members (2, 3; 12, 13, 14).

2. The device (1, 20) according to claim 1 **characterised in that** said at least a signalling device (6) is a light signalling device.

3. The device (1, 20) according to the claim 2 **characterised in that** said light signalling device is a light emitting diode (LED) (6a).

4. The device (1, 20) according to claim 2 **characterised in that** said light signalling device is a filament lamp.

5. The device (1, 20) according to claim 1 **characterised in that** said at least a signalling device (6) is an audible alarm.

6. The device (1, 20) according to any of the preceding claims **characterised in that** said signalling device (6) is fed by an electric power source (5).

7. The device (1, 20) according to claim 6 **characterised in that** said electric source (5) is a cell (5a) arranged in said support element (4).

8. The device (1, 20) according to claim 6 **characterised in that** said electric power source (5) consists of said electrolytic cell (C).

9. The device (1, 20) according to claim 6 **characterised by** comprising also means (7) breaking the connection between said signalling device (6) and said electric power source (5).

10. The device (1, 20) according to claim 9 **characterised in that** said breaking means (7) consists of a switch.

11. The device (1, 20) according to claim 9 **characterised in that** said electric power source (5), said signalling device (6) and said breaking means (7) are series connected to each other and to at least two of said conductive members (2, 3; 12, 13, 14).

12. The device (1, 20) according to claim 9 **characterised in that** said breaking means consist of a press switch (7a).

13. The device (1, 20) according to claim 1 **characterised in that** said support element (4) is associated with a plug (9)adapted to be inserted in a corresponding hole made in said electrolytic cell (C).

14. The device (1, 20) according to claim 13 **characterised in that** said plug (9) has an outer thread (11) matching a corresponding inner thread made in said hole.

15. The device (1, 20) according to claim 13 **characterised in that** said plug (9) has engagement means adapted to insert the plug by pressure into said hole.

16. The device (1, 20) according to any of the preceding claims **characterised in that** each of said conductive members (2, 3; 12, 13, 14) consists of a blade made of conductive metal.

17. The device (1, 20) according to any of claims 1 to 15 **characterised in that** each of said conductive members (2, 3; 12, 13, 14) is a blade made by electro-deposition on a plate of insulating material.

18. The device (1) according to any of the preceding claims **characterised in that** said conductive members (2, 3) are two.

19. The device (20) according to any of claims 1 to 17 **characterised in that** said conductive members (12, 13, 14) are three and at least one of said members has a length less than the two others.
